# EUROPEAN PATENT SPECIFICATION

(11) **EP 0 500 570 B1**
(45) Date of publication and mention of the grant of the patent: **07.12.1994**
(21) Application number: 90915508.7
(22) Date of filing: 31.10.1990
(51) Int. Cl.: F16J 15/00, B01D 53/04

(54) **EMISSION CONTROL DEVICE**
VORRICHTUNG ZUR EMISSIONSKONTROLLE
DISPOSITIF DE LIMITATION D'EMISSIONS

(30) Priority: 02.11.1989 GB 8924733
(43) Date of publication of application: 02.09.1992
(73) Proprietor: Flexibox Limited, Manchester M17 1SS (GB)
(72) Inventor: TEN HOUTE DE LANGE, Jacobus, Anton, Martinus, NL-2597 EE 's Gravenhage (NL)
(74) Representative: Allman, Peter John
(86) International application number: GB9001667
(87) International publication number: WO9106793

(56) References cited:
- DE-C- 3 801 948
- GB-A- 2 204 366
- US-A- 4 722 662

## Description

This invention relates to emission control devices especially but not exclusively for use with mechanical or other seal arrangements (hereinafter and in the claims simply called "mechanical seals") containing a static or flowing sealing and/or product liquid capable of emitting toxic or other undesirable substances upon liquid leakage from the seal arrangement.

The emission control device is capable of being used as a "breather", inter alia, with receptacles, pipelines or machines containing such a liquid.

Reference will be made hereinafter and in the claims to "mechanical seals" for convenience but it is to be clearly understood that such references are to be construed. where not directly pertinent to a mechanical seal, as including any apparatus containing a liquid which if leaking from the apparatus will give off toxic or other undesirable substances in vapour form (hereinafter and in the claims referred to as "toxic vapour emissions").

US-A-4722662 discloses a vapour emission control device in which a canister containing activated carbon is connected by a conduit to a cover of a housing for a mechanical seal, vapour from the housing passing through the conduit into the canister where it is adsorbed by the activated carbon.

It is an object of the present invention to provide an emission control device which copes simultaneously with both vapour and liquid emission from a mechanical seal for example.

According to a first aspect of the present invention there is provided an emission control device adapted for connection to a mechanical seal, the emission control device comprising a receptacle for receiving vapour emission from the mechanical seal and housing a filter for treating the vapour emission, and the emission control device being characterised in that the receptacle houses a container for receiving vapour carrying liquid leakage from the mechanical seal, the container communicating with the said filter for passage therethrough of vapour emission from the collected liquid to the surrounding environment with the said filter eliminating any toxicity from the vapour emission.

Preferably, the filter is an active carbon filter.

Preferably, the container is formed at least partly of glass or other transparent material to allow visual inspection of the amount of collected liquid.

A float may be provided within the container to assist such inspection.

The device is preferably in the form of a disposable cartridge incorporating a valve adapted to close on disconnection of the cartridge from the mechanical seal to prevent vapour emission from the cartridge.

Preferably the cartridge comprises a receptacle open to the surrounding environment and containing the liquid collecting container surrounded by the filter, the valve being loaded for closure to seal off communication between the container and the filter.

Preferably, the valve has a control stem actuable by a sealed coupling arrangement of a hose, tube or pipe (hereinafter and in the claims simply called "a hose") with end couplings and adapted to connect the control emission device and the mechanical seal in operative communicating relationship.

Preferably the filter is of annular construction with perforated end caps.

According to a second aspect of the present invention there is provided a mechanical seal arrangement comprising a mechanical seal in sealed connection with an emission control device as hereinbefore defined. Preferably, the sealed connection comprises a hose having at each end a coupling for connection to the mechanical seal and the emission control device respectively.

Preferably each respective coupling is adapted to activate a normally-closed valve at, for example, a drain connection of the mechanical seal, and a normally-closed valve in the emission control device to open condition, disconnection of the couplings causing both valves to close.

Preferably the mechanical seal comprises a normally-closed main seal, a normally-open standby seal, and a lip seal/bush assembly.

Preferably the drain connection is between the standby seal and the lip seal/bush assembly.

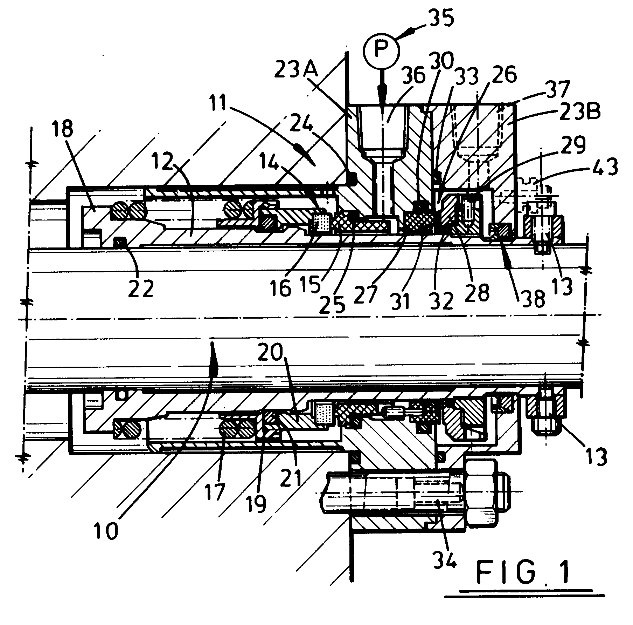

An embodiment of the present invention will now be described, by way of example, with reference to the accompanying drawings in which:-
Fig. 1 is a longitudinal sectional view of a mechanical seal to which the emission control device of the present invention is connected, the sectional view being on the line A-A of Fig. 2;
Fig. 2 is a transverse sectional view of the mechanical seal;
Fig. 3 is a sectional view of an emission control cartridge according to the invention adapted to be fitted to the mechanical seal; and
Fig. 4 is a diagrammatic view of the mechanical seal and coupling hose.

The mechanical seal is fitted to, for example, a pump where the rotating shaft is indicated at 10 and the pump housing at 11.

A shaft sleeve 12 surrounds and is keyed as indicated at 13 to rotate with the shaft 10.

A main fluid seal is indicated at 14 and comprises a stationary seaiing ring 15 in face-to face contact with a rotating sealing ring 16.

The rotating sealing ring 16 is urged into running contact with the stationary sealing ring 15 by an annular spring 17 abutting, at one end, a radial extension 18 of the shaft sleeve 12 and a spring carrier ring 19 at the other end.

The spring carrier ring 19 is connected to a sealing ring carrier 20 which supports the rotating sealing ring 16.

An O-ring seal 21 is disposed between the shaft sleeve 12, the spring carrier 19 and the sealing ring carrier 20.

An O-ring seal 22 is also provided between the shaft 10 and the shaft sleeve 12 at the radial extension end of the latter.

The mechanical seal housing is indicated at 23A, 23B and O-ring seals 24, 25 are respectively provided between same and the pump housing 11 and the stationary sealing ring 15.

The mechanical seal also comprises a standby seal indicated at 26 which consists of a stationary sealing ring 27 and rotatable sealing ring 28, these seal rings being normally spaced apart, i.e. the standby seal 26 is normally open. As a result no wear takes place in the standby seal 26 during normal operation of the main seal 14.

When the main seal 14 starts to leak excessively the pressure build up behind the stationary sealing ring 27 of the standby seal 26 will force the stationary sealing ring 27 to engage the rotary sealing ring 28 thereby providing an effective secondary seal.

The rotary sealing ring 28 has associated with it a pumping ring 29 for rotation with it and the shaft sleeve 12.

An O-ring seal 30 is provided between the seal housing 23A and the stationary sealing ring 27, and a piston ring 31 of, say, PTFE is provided between the latter and the shaft sleeve 12. This piston ring 31 serves to increase the sensitivity of the mechanical seal to leakage past the main fluid seal 14.

Also, O-ring seals 32, 33 are respectively provided between the rotating sealing ring 28 and the two parts 23A, 23B of the seal housing. These housing parts 23A, 23B are bolted together as indicated at 34.

A pressure sensor 35 is fitted to a connection 36 in the seal housing 23A to permit monitoring of the pressure build-up between the main seal 14 and the standby secondary seal 26.

The standby seal 26 will not become operative as long as liquid leakage from the main seal 14 is below a predetermined value. Such liquid leakage from the main seal 14 will pass the standby seal 26 unobstructed and will flow out of a drain connection 37 in the seal housing 23B.

Downstream of the drain connection 37 relative to the main seal 14 and the standby secondary seal 26 is a final barrier to the surrounding environment, which carrier is in the form of a lip seal/bush assembly 38.

The lip seal/bush assembly 38 runs dry in all foreseeable conditions.

The lip seal/bush arrangement 38 provides a complete closure to low level emissions from the main fluid seal 14 that do not actuate the secondary seal 26.

The secondary seal 26 ensures that the lip seal/bush arrangement 38 is protected from high emissions which would result in a pressure build up between the secondary seal 26 and the lip seal/bush arrangement 38.

The pumping ring 29 provides effective cooling to the secondary seal 26 when it is actuated by main seal leakage and also provides a low pressure area in front of the lip seal/bush arrangement 38. This low pressure area ensures that any leakage from the latter is inward and not outwardto atmosphere. This minimises the possible emissions from the mechanical seal.

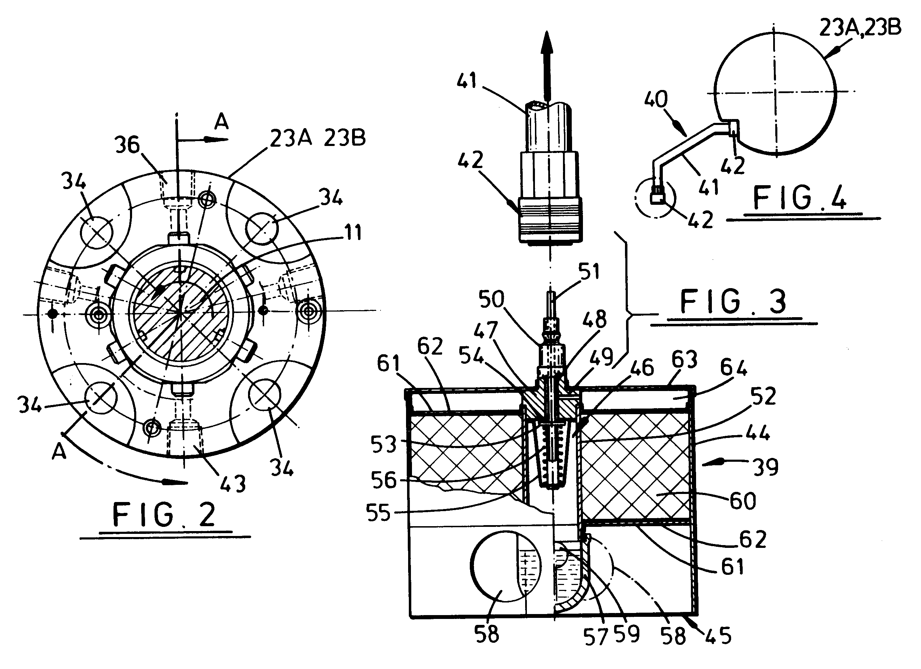

To prevent any toxic vapour emissions from the drain connection 37 of the mechanical seal there is fitted thereto an emission control cartridge 39 (see Fig. 3) according to this invention.

This cartridge 39 is disposable and is connected by a quick fitting sealed coupling arrangement 40 to the drain connection 37 of the mechanical seal. The sealed coupling arrangement 40 comprises a hose 41 with at each end a coupling 42.

One coupling 42 is connectible to a valve 43, normally spring-loaded to closed, at the mechanical seal drain connection 37, while the other coupling 42 is similarly connectible to a valve, normally spring loaded to closed, in the cartridge 39.

The emission control cartridge 39 comprises a receptacle 44 of epoxy coated steel open at one end as indicated at 45 and centrally mounting the normally-closed valve indicated at 46.

The valve 46 is carried by a bush 47 mounted in the cartridge casing 44, which bush 47 is traversed by an axial passage 48 having one or more lateral branch passages 49.

The bush 47 mounts a coupling element 50 complementary to the coupling 42 and an axially-movable operating spindle 51 is supported in the axial passage 48.

The bush 47 is plugged into an open end of a liquid container 52 and the spindle 51 extends therein and carries a valve element 53 supporting a fluor-silicon packing 54 adapted to abut the bush 47 to close the axial passage 48.

A spring carrier 55 is connected to the bush 47 inside the container 52 and a coil spring 56 is supported at one end therein, the other end of the spring 56 abutting the valve element 53, 54 to urge the latter into the closed position.

The lower end 57 of the container 52 is formed of glass or other suitable transparent material so that the content of the container 52 can readily be observed through viewing ports 58 in the housing 44.

A float 59 is provided in the container 52, 57 to facilitate the aforesaid observation.

An annular active carbon filter 60 surrounds the container 52 above its transparent lower end 57 and at each end is provided with a perforated filter end cap 61 with an internal layer 62 of wire mesh or textile.

The filter 60 to 62 is spaced from the closed end 63 of the receptacle 44 to define a chamber 64 into which the or each lateral branch passage 49 opens.

The normally-closed valve 43 in the mechanical seal is generally of the same construction as that in the emission control device but may be of any known construction provided it moves to open condition when its coupling 42 is secured thereto.

With the mechanical seal drain connection 37 connected to the emission control device by the sealed coupling arrangement 40, the valves 43 and 46 are open and any liquid leakage from the mechanical seal is collected in the container 52, 57. Any toxic vapour emission from this liquid passes along passages 48, 49 into the chamber 64 and thence to atmosphere through the carbon filter 60 which removes any toxicity from the vapour before it reaches the surrounding air.

By viewing the liquid level in the container 52, 57 an operator can decide when the cartridge needs to be replaced. This decision can be facilitated by other means, for example a colouring medium in the container reactive to a predetermined value of toxicity of the liquid contained therein.

Disconnection of the sealed coupling arrangement 40 for cartridge replacing automatically closes the valves 43, 46.

It is to be noted that the absorption of the active carbon filter tends to become smaller with lower molecular weight chemicals.

It is preferred that the plant within which the pump is operating has sniffing equipment available to make checks at regular intervals to monitor the emission status of the emission control cartridge 39 so that regular monitoring of the emission status of the emission control cartridge 39 is effected.

The vessel may be connected to the cartridge 39 without a normally-closed valve at the vessel end of the sealed coupling arrangement 40.

For the avoidance of doubt the term "mechanical seal" is to be construed as meaning any apparatus or vessel from which liquid may leak which liquid is capable of emitting toxic or other undesirable substance vapours or from which there is direct emission of toxic or other undesirable substance vapours.

## Claims

1. An emission control device adapted for connection to a mechanical seal, the emission control device (39) comprising a receptacle (44) for receiving vapour emission from the mechanical seal and housing a filter (60) for treating the vapour emission, and the emission control device (39) being characterised in that the receptacle (44) houses a container (52,57) for receiving vapour-carrying liquid leakage from the mechanical seal, which container (52,57) communicates with the said filter (60) for passage therethrough of vapour emission from the collected liquid to the surrounding environment with the said filter (60) eliminating any toxicity from the vapour emission.

2. A device as claimed in claim 1, in which the filter (60) is an active carbon filter.

3. A device as claimed in claim 1 or 2, in which the container (52,57) is formed at least partly of glass or other transparent material to allow visual inspection of the amount of collected liquid.

4. A device as claimed in claim 3, in which a float (59) is provided within the container (52,57) to assist such inspection.

5. A device as claimed in any one of claims 1 to 4, in which the device is in the form of a disposable cartridge (39) incorporating a valve (46) adapted to close on disconnection of the cartridge (39) from the mechanical seal to prevent vapour emission from the cartridge (39).

6. A device as claimed in claim 5, in which the cartridge (39) comprises the receptacle (44) which is open to the surrounding environment and which houses the liquid collecting container (52,57) which is surrounded by the filter (60), the valve (46) being loaded for closure to seal off communication between the container (52,57) and the filter (60).

7. A device as claimed in claim 5 or 6, in which the valve (46) has a control stem (51) actuable by a sealed coupling arrangement (40) of a hose (41) with end couplings (42) and adapted to connect the control emission device (39) and the mechanical seal in operative communicating relationship.

8. A device as claimed in any one of claims 1 to 6, in which the filter (60) is of annular construction with perforated end caps (61).

9. A mechanical seal arrangement comprising a mechanical seal in sealed connection with an emission control device (39) as claimed in any one of claims 1 to 8.

10. An arrangement as claimed in claim 9, in which the sealed connection comprises a hose (41) having at each end a coupling (42) for connection to the mechanical seal and the emission control device (39) respectively.

11. An arrangement as claimed in claim 10, in which each respective coupling (42) is adapted to activate a normally-closed valve (43) at, for example, a drain connection (37) of the mechanical seal, and a normally-closed valve (46) in the emission control device (39) to open condition, disconnection of the couplings (42) causing both valves (43,46) to close.

12. An arrangement as claimed in any one of claims 9 to 11, in which the mechanical seal comprises a normally-closed main seal (14), a normally-open standby seal (26), and a lip seal/bush assembly (38).

13. An arrangement as claimed in claim 12, in which the drain connection (37) is between the standby seal (26) and the lip seal/bush assembly (38).

## Patentansprüche

1. Vorrichtung zur Emissionskontrolle, welche zur Verbindung mit einer mechanischen Dichtung ausgeführt ist, wobei die Vorrichtung (39) zur Emissionskontrolle ein Gefäß (44) zur Aufnahme von aus der mechanischen Dichtung emittiertem Dampf umfaßt, und in der Vorrichtung (39) zur Emissionskontrolle ein Filter (60) zur Behandlung der Dampfemission untergebracht ist, wobei die Vorrichtung (39) zur Emissionskontrolle dadurch gekennzeichnet ist, daß in dem Gefäß (44) ein Behälter (52, 57) zur Aufnahme von dampftragendem Flüssigkeitsausfluß aus der mechanischen Dichtung untergebracht ist, welcher Behälter (52, 57) mit dem Filter (60) zwecks Durchgang von Dampfemission aus der gesammelten Flüssigkeit durch diesen Filter an die Umgebung in Verbindung steht, wobei der Filter (60) jegliche Toxizität aus der Dampfemission entfernt.

2. Vorrichtung nach Anspruch 1, bei der der Filter (60) ein Aktivkohlefilter ist.

3. Vorrichtung nach Anspruch 1 oder 2, bei der der Behälter (52, 57) zumindest teilweise aus Glas bzw. einem anderen durchsichtigen Material gebildet ist, um eine visuelle Überprüfung der Menge gesammelter Flüssigkeit zu ermöglichen.

4. Vorrichtung nach Anspruch 3, bei der im Behälter (52, 57) zur Unterstützung einer derartigen Kontrolle ein Schwimmer (59) vorgesehen ist.

5. Vorrichtung nach einem der Ansprüche 1 bis 4, bei der die Vorrichtung in Form einer Einwegpatrone (39) vorgesehen ist, die ein Ventil (46) umfaßt, welches so ausgeführt ist, daß es bei einer Abtrennung der Patrone (39) von der mechanischen Dichtung schließt, um eine Dampfemission aus der Patrone (39) zu verhindern.

6. Vorrichtung nach Anspruch 5, bei der die Patrone (39) das Gefäß (44) umfaßt, welches zur Umgebung hin offen ist und in welchem der von dem Filter (60) umgebenen Behälter (52, 57) zur Sammlung von Flüssigkeit untergebracht ist, wobei das Ventil (46) zum Abschließen der zwischen dem Behälter (52, 57) und dem Filter (60) bestehenden Verbindung auf Verschluß hin vorgespannt wird.

7. Vorrichtung nach Anspruch 5 oder 6, bei der das Ventil (46) einen Ventilschaft (51) aufweist, der durch eine abgedichtete Kupplungsanordnung (40) eines Schlauchs (41) mit Endkuppelstücken (42) betätigbar und so ausgeführt ist, daß er die Vorrichtung (39) zur Emissionskontrolle und die mechanische Dichtung in eine Wirkverbindung miteinander bringen kann.

8. Vorrichtung nach einem der Ansprüche 1 bis 6, bei der der Filter (60) ringförmig und mit perforierten Endkappen (61) ausgeführt ist.

9. Mechanische Dichtungsanordnung, welche eine mit einer Vorrichtung (39) zur Emissionskontrolle gemäß einem der Ansprüche 1 bis 8 in dichtender Verbindung stehende mechanische Dichtung umfaßt.

10. Anordnung nach Anspruch 9, bei der die dichtende Verbindung einen Schlauch (41) umfaßt, der an jedem Ende ein Kuppelstück (42) für die jeweilge Verbindung mit der mechanischen Dichtung und der Vorrichtung (39) zur Emissionskontrolle aufweist.

11. Anordnung nach Anspruch 10, bei der jedes jeweilige Kuppelstück (42) so ausgeführt ist, daß es ein normalerweise geschlossenes Ventil (43) an beispielsweise einer Abflußverbindung (37) der mechanischen Dichtung, und ein normalerweise geschlossenes Ventil (46) in der Vorrichtung (39) zur Emissionskontrolle in den offenen Zustand betätigen kann, wobei eine Abtrennung der Kuppelstücke (42) beide Ventile (43, 46) zum Schließen veranlaßt.

12. Anordnung nach einem der Ansprüche 9 bis 11, in der die mechanische Dichtung eine normalerweise geschlossene Hauptdichtung (14), eine normalerweise offene Notdichtung (26) und einen Lippendichtung/Buchsen-Aufbau (38) umfaßt.

13. Anordnung nach Anspruch 12, bei der die Abflußverbindung (37) sich zwischen der Notdichtung (26) und dem Lippendichtung/Buchsen-Aufbau (38) befindet.

## Revendications

1. Dispositif de contrôle d'émission adapté pour connexion à une garniture mécanique d'étanchéité, le dispositif de contrôle d'émission (39) comprenant un réceptable (44) pour recevoir une émission de vapeur provenant de la garniture mécanique d'étanchéité et accueillant un filtre (60) pour traiter l'émission de vapeur, et le dispositif de contrôle d'émission (39) étant caractérisé en ce que le réceptacle (44) accueille un récipient (52, 57) pour recevoir une fuite de liquide transportant de la vapeur provenant de la garniture mécanique d'étanchéité, lequel récipient (52, 57) communique avec ledit filtre (60) pour le passage à travers celui-ci de l'émission de vapeur provenant du liquide recueilli à l'environnement immédiat, ledit filtre (60) éliminant toute toxicité provenant de l'émission de vapeur.

2. Dispositif selon la revendication 1, dans lequel le filtre (60) est un filtre au charbon actif.

3. Dispositif selon la revendication 1 ou la revendication 2, dans lequel le récipient (52, 57) est formé au moins partiellement en verre ou en autre matière transparente pour permettre une inspection visuelle de la quantité de liquide recueilli.

4. Dispositif selon la revendication 3, dans lequel un bouchon flotteur (59) est prévu à l'intérieur du récipient (52, 57) pour aider une telle inspection.

5. Dispositif selon l'une quelconque des revendications 1 à 4, dans lequel le dispositif est sous forme d'une cartouche jettable (39) comportant une soupape (46) adaptée pour se fermer lors de la mise hors de contact de la cartouche (39) de la garniture mécanique d'étanchéité pour empêcher l'émission de vapeur provenant de la cartouche (39).

6. Dispositif selon la revendication 5, dans lequel la cartouche (39) comprend le réceptable (44) qui est ouvert à l'environnement immédiat et qui accueille le récipient (52, 57) recueillant le liquide qui est entouré par le filtre (60), la soupape (46) étant chargée pour que la fermeture scelle la communication entre le récipient (52, 57) et le filtre (60).

7. Dispositif selon la revendication 5 ou 6, dans lequel la soupape (46) possède une tige de commande (51) actionnable par un agencement (40) à couplage étanche d'un tuyau souple (41) avec des couplages d'extrémité (42) et adapté pour raccorder le dispositif de contrôle d'émission (39) et la garniture mécanique d'étanchéité en relation de communication opérationnelle.

8. Dispositif selon l'une quelconque des revendications 1 à 6, dans lequel le filtre (60) est de construction annulaire avec des capuchons d'extrémité perforés (61).

9. Agencement à garniture mécanique d'étanchéité comprenant une garniture mécanique d'étanchéité en connexion étanche avec un dispositif de contrôle d'émission (39) selon l'une quelconque des revendications 1 à 8.

10. Agencement selon la revendication 9, dans lequel la connexion étanche comprend un tuyau souple (41) possédant à chaque extrémité un couplage (42) pour connexion avec la garniture mécanique d'étanchéité et le dispositif de contrôle d'émission (39) respectivement.

11. Agencement selon la revendication 10, dans lequel chaque couplage respectif (42) est adapté pour actionner une soupape normalement fermée (43) au niveau, par exemple, d'un raccord d'évacuation (37) de la garniture mécanique d'étanchéité, et une soupape normalement fermée (46) dans le dispositif de contrôle d'émission (39) en état ouvert, la mise hors contact des couplages (42) provoquant la fermeture des deux soupapes (43, 46).

12. Agencement selon l'une quelconque des revendications 9 à 11, dans lequel la garniture mécanique d'étanchéité comprend une garniture d'étanchéité principale normalement fermée (14), une garniture d'étanchéité de réserve normalement ouverte (26), et un bloc (38) joint à lèvre/douille.

13. Agencement selon la revendication 12, dans lequel le raccord d'évacuation (37) est entre la garniture de réserve (26) et le bloc (38) joint à lèvre/douille.
